# EUROPÄISCHE PATENTSCHRIFT

(11) **EP 0 490 157 B1**
(45) Veröffentlichungstag und Bekanntmachung des Hinweises auf die Patenterteilung: **29.06.1994**
(21) Anmeldenummer: 91120105.1
(22) Anmeldetag: 26.11.1991
(51) Int. Cl.: F16L 55/033

(54) **Schwingungsdämpfendes Halteelement für Rohrleitungen**
Vibration-absorbing fixing element for pipelines
Support amortisseur de vibrations pour conduites

(30) Priorität: 13.12.1990 DE 4039822
(43) Veröffentlichungstag der Anmeldung: 17.06.1992
(73) Patentinhaber: A. Raymond GmbH & Co. KG, D-79539 Lörrach (DE)
(72) Erfinder: Jünemann, Dietrich, W-7850 Lörrach (DE); Schneider, Wolfgang, W-7842 Kandern-Wollbach (DE); Wolpensinger, Werner, W-7888 Rheinfelden (DE)
(74) Vertreter: Kirchgaesser, Johannes, Dipl.-Ing.

(56) Entgegenhaltungen:
- EP-A- 0 230 553
- DE-A- 3 025 601
- DE-A- 3 544 785
- DE-A- 3 907 067

## Beschreibung

Die Erfindung bezieht sich auf ein schwingungsdämpfendes Halteelement für Rohrleitungen und insbesondere für Bremsleitungen von Kraftfahrzeugen gemäß dem Oberbegriff des Hauptanspruchs.

Ein solches Halteelement ist beispielsweise aus der DE 35 44 785 A1 bekannt. Diese Halterung ist zwar in erster Linie als Abdichtungssystem für Wanddurchführungen von Leitungen wie Bremsleitungen gedacht und dementsprechend sind auch die Aufnahmekörper aus einem sehr nachgiebigen Material wie Moosgummi oder dergleichen hergestellt. Gleichzeitig soll aber auch eine gewisse Bewegungsfreiheit für die Bremsleitungen gewährleistet sein. Hierzu weisen die Aufnahmekörper in ihrer Mitte halbringförmige Halteschalen auf, welche den jeweiligen Rohrdurchmessern angepaßt und mit den Außenschalen des Aufnahmekörpers über sich nach außen erstreckende Bindeglieder verbunden sind.

Diese Bindeglieder können nach einem der gezeigten Ausführungsbeispiele durch eine radial verlaufende Trennwand und nach einem anderen Ausführungsbeispiel durch zwei etwa kegelförmig zueinander ausgerichtete Trennwände gebildet sein, wobei im letzteren Fall die halbringförmigen Schalen durch mittige Ausnehmungen geteilt sind. Durch die letztgenannten Trennwände wird aber, wie durch die Pfeile in der Zeichnung angedeutet, in erster Linie der Taumelbewegung der Bremsleitungen Rechnung getragen.

Eine schwingungsdämpfende Wirkung kann dagegen nicht erwartet werden, da es sich in beiden Fällen um umlaufende Trennwände handelt. Hierbei dürften die vertikal bzw. radial an den halbringförmigen Schalen angeformten Trennwände für radial wirkende Schwingungen der Bremsleitung eine noch weniger dämpfende Wirkung haben als die schräg angeformten Trennwände nach dem zweiten Ausführungsbeispiel. Letztere sind dafür aber wegen der Ausnehmungen in der Mitte schwerer zu entformen und daher teurer in der Herstellung.

Aufgabe der Erfindung ist es, bei dem gattungsgemäßen Halteelement die Lagerung der Halteschalen so zu gestalten, daß diese bei einfacher Herstellung eine optimale Dämpfungswirkung ergeben.

Diese Aufgabe wird erfindungsgemäß dadurch gelöst, daß die Bindeglieder als V-förmig abgeknickte Federbeine ausgebildet sind, deren Kniespitzen - in Achsrichtung der Halteschalen gesehen - abwechselnd nach der einen und der anderen Seite gerichtet sind.

Durch die entformungstechnisch günstige Ausbildung der Federbeine wird mit einfachen Mitteln eine hervorragende Dämpfungseigenschaft erreicht. Für eine möglichst kompakte Ausbildung des Halteelements ist es zudem vorteilhaft, wenn die Federbeine sowohl an den halbringförmigen Halteschalen als auch an den Außenschalen etwa in der Schalenmitte angeformt sind.

In der Zeichnung ist ein Ausführungsbeispiel der Erfindung dargestellt und soll nachfolgend näher erläutert werden.
Es zeigt
- Fig. 1: den erfindungsgemäßen Aufnahmekörper in Seitenansicht im offenen Anlieferungszustand,
- Fig. 2: einen Schnitt durch eine Aufnahmeschale mit Federbeinen gemäß Linie II - II in Figur 1,
- Fig. 3: einen anderen Schnitt durch die Aufnahmeschale gemäß Linie III - III in Figur 1,
- Fig. 4: das Einsetzen des Aufnahmeteils in das geöffnete Halteteil und
- Fig. 5: das Aufnahmeteil mit Halteteil im geschlossenen und montierten Zustand mit eingesetzten Rohrleitungen.

Das in den Figuren dargestellte Halteelement dient zur schwingungsdämpfenden Halterung von Rohrleitungen und insbesondere von Bremsleitungen von Kraftfahrzeugen.

Das Halteelement besteht aus einem Haltekörper 1 und einem in diesen einsetzbaren Aufnahmekörper 2 für die zu haltenden Rohrleitungen 3. Der Haltekörper 1 ist hierbei aus zwei Teilen 4 und 5 gebildet, welche über ein Filmscharnier 9 schwenkbar miteinander verbunden sind. Der Haltekörper 1 ist im vorliegenden Fall aus einem hartelastischen Material hergestellt.

An den beiden freien Enden der Haltekörperteile 4 und 5 sind Verhakungselemente 6 und 7 vorgesehen, durch welche das Unterteil 4 und das Oberteil 5 im zusammengeschwenkten Zustand miteinander verbindbar sind (Fig. 5).

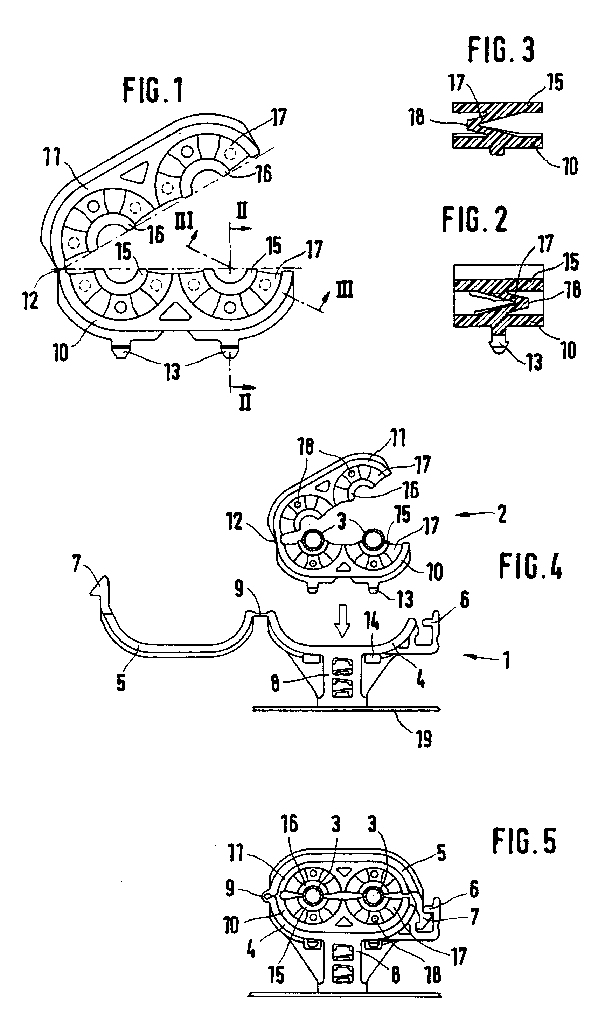

Das Unterteil 4 ruht auf einem Fußteil 8, welches durch eine der üblichen Befestigungsarten wie beispielsweise Schraub- oder Bolzenverbindungen auf einer Trägerplatte 19 verankerbar ist (Fig. 4).

Der Aufnahmekörper 2 besteht ebenfalls aus zwei Außenschalen 10 und 11, welche aus weichelastischem Material wie beispielsweise Moosgummi oder dergleichen hergestellt sind und durch ein Filmscharnier 12 schwenkbar miteinander verbunden sein können. Jede Außenschale 10 und 11 ist in ihrem äußeren Bereich der Form der Haltekörperteile 4 und 5 angepaßt und in diese einsetzbar, wobei die untere Schale 10 mit Rastnocken 13 versehen ist, welche in entsprechenden Aussparungen 14 des unteren Teils 4 des Haltekörpers 1 einsteckbar und verankerbar sind.

Jede der Außenschalen 10 und 11 weist in ihrer Mitte eine dem Durchmesser der Rohrleitung 3 angepaßte Halteschale 15 und 16 auf, welche mit den zugehörigen Außenschalen 10 bzw. 11 etwa in der Schalenmitte über V-förmig abgeknickte Federbeine 17 schwingungsdämpfend verbunden sind. Die Federbeine sind über den Umfang der beiden Halteschalen 15 und 16 gleichmäßig verteilt und so abgeknickt, daß die Kniespitzen 18 - in Achsrichtung gesehen - abwechselnd nach der einen und der anderen Seite gerichtet sind.

## Patentansprüche

1. Schwingungsdämpfendes Halteelement für Rohrleitungen, insbesondere für Bremsleitungen von Kraftfahrzeugen, bestehend aus einem aus zwei Teilen zusammensetzbaren Haltekörper (1) aus hartelastischem Material und in den Haltekörper (1) einsetzbaren, aus zwei Außenschalen (10,11) bestehenden Aufnahmekörper (2) aus weichelastischem Material für die Rohrleitungen (3), wobei die in ihrer äußeren Form dem Haltekörper (1) angepaßten Außenschalen (10,11) in ihrer Mitte den Rohrleitungen (3) angepaßte halbringförmige Halteschalen (15,16) aufweisen, die mit den Außenschalen (10,11) des Aufnahmekörpers (2) mittig über sich radial nach außen erstreckende Bindeglieder verbunden sind,
**dadurch gekennzeichnet,** daß
die Bindeglieder als V-förmig abgeknickte Federbeine (17) ausgebildet sind, deren Kniespitzen (18) - in Achsrichtung der Halteschalen (15 u. 16) gesehen - abwechselnd nach der einen und der anderen Seite gerichtet sind.

2. Schwingungsdämpfendes Halteelement nach Anspruch 1, dadurch gekennzeichnet, daß die Federbeine (17) sowohl an den halbringförmigen Halteschalen (15,16) als auch an den Außenschalen (10,11) etwa in der Schalenmitte angeformt sind.

## Claims

1. A vibration-absorbing holding element for pipelines, in particular for brake lines of motor vehicles, comprising a holding body (1) of hard-elastic material which can be assembled from two portions and a receiving body (2) of soft-elastic material for the pipelines (3), which receiving body can be fitted into the holding body (1) and comprises two outer shells (10, 11), wherein the outer shells (10, 11) which are matched in respect of their external shape to the holding body (1) are provided in their middle with semi-annular holding shells (15, 16) which are matched to the pipelines (3) and which are connected centrally to the outer shells (10, 11) of the receiving body (2) by way of radially outwardly extending connecting members, characterised in that the connecting members are in the form of spring legs (17) which are bent in a V-shape and whose knee apexes (18) - as viewed in the axial direction of the holding shells (15 and 16) - are directed alternately towards one side and the other.

2. A vibration-absorbing holding element according to claim 1 characterised in that the spring legs (17) are moulded both on the semi-annular holding shells (15, 16) and also the outer shells (10, 11) approximately at the middle of the shells.

## Revendications

1. Organe support antivibratile pour canalisations, plus particulièrement destiné au maintien en position de conduites de circuit de freinage dans les véhicules automobiles, se composant d'un élément de retenue (1), constitué par l'assemblage de deux parties, réalisé dans une matière plastique à cédage élastique dur, et d'un élément formant logement (2) pour le montage des canalisations (3), se composant de deux coquilles (10) et (11), réalisé dans une matière plastique à cédage élastique souple, qui vient s'emmancher dans l'élément de retenue (1), les coquilles extérieures (10) (11), dont la géométrie extérieure est adaptée à la configuration de l'élément de retenue (1), comportant en l'occurrence en leur centre des alvéoles de retenue de forme semi-circulaire (15) (16) adaptées au diamètre des canalisations (3), qui sont reliées, selon une disposition centrale, aux coquilles extérieures (10)(11) de l'élément formant logement (2) par l'intermédiaire d'organes de liaison s'étendant vers l'extérieur dans le plan radial, **se caractérisant par le fait** que les organes de liaison sont réalisés sous la forme de pattes élastiques (17) repliées en forme de V, dont les extrémités (18) sont, lorsque l'on observe l'organe support dans le sens axial des alvéoles de retenue (15) et (16), orientées alternativement d'un côté et de l'autre.

2. Organe support antivibratile suivant la revendication 1, se caractérisant par le fait que les pattes élastiques (17) sont réalisées solidaires par moulage, sensiblement au centre de l'alvéole de retenue, à la fois des alvéoles de retenue (15) (16) et des coquilles extérieures (10) (11).
